# DEMANDE DE BREVET EUROPEEN

(11) **EP 3 495 105 A2**
(43) Date de publication de la demande: **12.06.2019**
(21) Numéro de dépôt: 18209627.1
(22) Date de dépôt: 30.11.2018
(51) Int. Cl.: B27K 3/00, B27K 3/08, B27K 3/14

(54) **MATÉRIAU COMPOSITE POUR LA PRÉHENSION D'OBJETS À HAUTE TEMPÉRATURE**

(30) Priorité: 06.12.2017 FR 1761717
(71) Demandeur: Commissariat à l'Energie Atomique et aux Energies Alternatives, 75015 Paris (FR)
(72) Inventeur: DELLEA, Olivier, 38054 Grenoble Cedex 09 (FR); GETTO, Daniel, 38054 Grenoble Cedex 09 (FR); PONCELET, Olivier, 38054 Grenoble Cedex 09 (FR)
(74) Mandataire: Nony

(57) **Abrégé**

La présente invention concerne un matériau composite adapté pour une mise en contact avec un ou des objet(s) ayant une température supérieure ou égale à 250°C, notamment à des fins de préhension et/ou façonnage, caractérisé en ce que ledit matériau est un bois chargé en nanoparticules métalliques.

Elle concerne également un objet formé en partie d'un matériau selon l'invention et un procédé pour charger un matériau de type bois avec une ou plusieurs nanoparticules métalliques.

## Description

La présente invention concerne la manutention d'objets formés à chaud, et plus particulièrement la manipulation de la verrerie à chaud et vise notamment à proposer un nouveau matériau efficace pour la préhension et/ou le façonnage de tels objets à haute température.

Dans la fabrication de la verrerie par des procédés automatiques, le verre fondu est mis en forme sur des chaînes de production fonctionnant en continu et les articles verriers ainsi formés sont distribués, alors qu'ils sont encore à température très élevée, sur des convoyeurs pour les acheminer rapidement (à une vitesse de plusieurs m/s) vers les zones de finition et de stockage. Sur ce trajet, des systèmes rotatifs (carrousels) ayant des dispositifs à pinces en périphérie saisissent ces articles chauds (400-500°C) pour les distribuer sur les différentes lignes de fabrication de l'usine.

L'extrémité des outils, généralement des pinces, au contact du verre est donc exposée à des conditions extrêmement agressives qui sont de trois types :
- chocs mécaniques, lorsque l'article arrive au contact de la pince avec une vitesse de plusieurs m/s, et qui engendrent un facteur d'usure important pour la pince en considérant que 55 à 140 articles sont saisis par minute,
- chocs thermiques, lorsque l'extrémité de la pince entre en contact avec un article verrier porté à une température de 400 à 500°C et ceci de manière continue et.
- agression physico-chimique, compte-tenu du caractère particulièrement oxydant de la surface du verre chaud et du temps de contact, de l'ordre de 3 à 7 secondes, de l'extrémité de la pince avec cette surface.

Il a donc été nécessaire de développer des matériaux pour permettre la manutention de la verrerie à chaud, à toutes les températures allant jusqu'aux plus élevées selon l'usage général (normalement pas plus de 700°C), sans provoquer de choc thermique au produit ni endommager la surface du verre, et également permettre la manipulation d'autres produits formés à chaud qui exigent des matériaux de manipulation résistants thermiquement et qui ne marquent pas le produit.

Idéalement, un tel matériau se doit d'être thermiquement stable, résistant aux chocs mécaniques et aux contraintes thermiques, résistant au pouvoir oxydant du verre, être non ou faiblement poreux pour s'affranchir du risque de contamination, et posséder une faible conductivité thermique ainsi qu'un haut degré de ténacité [1].

Toutefois, les matériaux composites, actuellement considérés comme consommables pour les chaines de production d'emballages verriers, ne permettent pas de satisfaire à l'ensemble de ces exigences.

A titre illustratif des matériaux actuellement disponibles pour cet usage peuvent être notamment cités les composites à base de polyimide chargé en graphite à l'image notamment des produits Cerberite® [2] et Tecasint [5], voire complémenté en fibres de carbone comme par exemple les produits commerciaux Vespel® SP-22 et Vespel® SCP-5050 [3] [4], les composites carbone/fibres de carbone comme par exemple les produits T26-HDP [6] et Isofral [7], les composites époxy/fibres de verre comme en particulier l'Isofral GFE [8], les composites vitrocéramiques tels que par exemple le produit Tactylit [9] et les composites bronze (75% vol.)/téflon, spécifiques aux inserts de roues de transfert.

Une difficulté majeure rencontrée dans l'élaboration de tels matériaux est l'ajustement d'un coefficient de friction ou d'un module d'Young non préjudiciable aux autres performances recherchées. A ce titre, les matériaux de type céramique, carbure de silicium ou alumine, sont considérés comme trop durs pour une utilisation à titre d'insert dans le secteur de la fabrication de la verrerie.

Une autre problématique rencontrée avec des matériaux composites existants est une durée de vie jugée insuffisante.

Enfin, certains d'entre eux posent un problème sanitaire dans la mesure où, à terme, ils génèrent des vapeurs toxiques lorsqu'ils sont chauffés à haute température. C'est notamment le cas des pièces de contact actuellement utilisées en verreries industrielles pour saisir les pièces de verre chaudes (400°C-800°C) et les déposer sur les convoyeurs. Ces pinces sont en acier mais la zone de contact avec le verre comprend un premier composant qui joue le rôle d'amortisseur (téflon, polyimide), et un matériau conducteur thermique (graphite, bronze) qui joue le rôle de radiateur. La décomposition thermique du téflon qui finit par se produire génère des composés volatiles fluorés toxiques (CH₂F, CF₂, HF, ...).

En conséquence, il demeure un besoin de nouveaux matériaux composites dont les performances soient améliorées.

La présente invention a précisément pour objet de proposer un nouveau matériau permettant de répondre à ces attentes.

Ainsi, la présente invention vise à titre principal un matériau composite adapté pour une mise en contact avec un ou des objet(s) ayant une température supérieure ou égale à 250°C, caractérisé en ce que ledit matériau est un bois chargé en nanoparticules métalliques.

De manière inattendue, les inventeurs ont en effet constaté qu'il est possible de modifier les propriétés du bois et en particulier ses propriétés thermiques, sous réserve de le charger en particules métalliques.

Selon une variante préférée, le matériau composite selon l'invention est formé d'un matériau de type bois chargé en nanoparticules à un état d'oxydation zéro.

Selon un mode de réalisation préféré, l'objet ayant une température supérieure ou égale à 250 °C est un matériau formé à chaud de type verre, céramique, métal ou composite et est de préférence est un article verrier.

Comme il ressort des exemples ci-après, le matériau composite selon l'invention s'avère avantageux à plusieurs titres.

Son coût et son poids sont diminués comparativement aux inserts déjà existants.

Bien entendu, il est également résistant à la corrosion et à l'oxydation. Il est ainsi adapté pour une mise en contact avec un objet dont la température est comprise entre 250 °C et 400 °C.

Enfin, il n'est pas affecté par les chocs mécaniques liés à la réception des articles dont le poids peut être compris entre 100 et 300 grammes et qui se déplacent, avant le contact, avec une vitesse de plusieurs mètres par seconde.

L'invention vise également un objet formé en partie d'un matériau composite conforme à l'invention. Un tel objet peut être un insert, notamment à l'image de ceux destinés à être utilisés pour la préhension d'objets à chaud.

L'invention vise en outre un procédé de préparation d'un matériau composite conforme à l'invention.

Plus particulièrement, elle concerne un procédé pour charger un matériau de type bois avec une ou plusieurs nanoparticules métalliques, caractérisé en ce qu'il met en contact un matériau de type bois avec un fluide à un état supercritique véhiculant des nanoparticules métalliques à un état oxydé, dans des conditions de pression et de température propices à la pénétration de tout ou partie desdites nanoparticules dans ledit matériau et à la réduction *in situ* de tout ou partie desdites nanoparticules en particulier à un état d'oxydation zéro.

A la connaissance des inventeurs des fluides en conditions supercritiques ont essentiellement été mis en oeuvre avec du bois à des fins bien différentes de celle considérée selon l'invention.

Ainsi, il a été proposé de mettre à profit un véhicule de type dioxyde de carbone (CO₂) en conditions supercritiques pour véhiculer un certain nombre de composés dans du bois en vue de le traiter en profondeur. En particulier, le document J. Mater. Sci., 2011, 46, 5406-5411 met à profit cette technologie pour l'introduction de sels de calcium (CaCl₂) et de sodium (NaCl), les documents Wood Sci. Technol., 2012, 46, 643-656, WO 00/27601 et WO 03/095165, pour l'imprégnation de composés antifongiques, le document DE 4202320 A1 pour l'imprégnation d'une huile de silicone et le document WO 2011/066830 pour une diffusion de copolymères blocs.

L'invention découle notamment de l'observation par les inventeurs, qu'il est possible d'utiliser un fluide supercritique pour charger en profondeur un bois, avec des nanoparticules métalliques, et de conférer ainsi au bois traité des propriétés accrues en termes de résistance mécanique et à l'égard de la corrosion et de l'oxydation.

### MATERIAU COMPOSITE SELON L'INVENTION

### a) Bois

Dans la description qui suit, le terme « bois » sera utilisé de manière générique pour désigner toute essence de bois en tant que telle.

Il existe un grand nombre d'essences de bois comme en particulier le Peuplier, le Merisier, le Châtaigner, le Hêtre, le Frêne, le Platane, le Noyer.

Bien entendu, ces différentes essences peuvent se distinguer également les unes des autres par leurs propriétés mécaniques et leurs conductivités thermiques qui sont corrélées à leurs densités.

Le tableau ci-dessous renseigne pour les essences de bois précitées, leurs densités et leurs valeurs de dureté selon la norme NF B51-013.

| Classes de densité et de dureté | Densité *d* | Dureté (échelle Chalais-Meudon) | Essences |
|---|---|---|---|
| Bois très lourds et très durs | > 0,85 | > 9 | - |
| Bois lourds et durs | 0,70 à 0,85 | 5 à 9 | Frêne |
| Bois mi-lourds et midurs | 0,56 à 0,70 | 2,5 à 5 | Châtaigner, Hêtre, Noyer, Platane |
| Bois légers et tendres | 0,45 à 0,55 | 1,25 à 2,5 | Merisier |
| Bois très légers et très tendres | < 0,45 | < 1,25 | Peuplier |

Conviennent tout particulièrement à l'invention, les essences de bois possédant une dureté supérieure à 2,5 sur l'échelle de Chalais-Meudon.

Ainsi, selon un mode de réalisation, le bois chargé en nanoparticules métalliques selon l'invention possède une dureté supérieure à 2,5.

Conviennent tout particulièrement à l'invention les essences de bois possédant une densité d'au moins 0,6 et de préférence variant de 0,6 à 1,2.

Ainsi, le matériau de type bois est de préférence choisi parmi les essences de frêne, hêtre et de bois exotiques tel que l'ébène et le palissandre.

Pour ce qui est de la conductivité thermique d'un bois, elle dépend également du taux d'humidité et de la direction considérée, soit parallèlement aux fibres (direction L pour Longitudinal), soit perpendiculairement à celles-ci (directions R pour Radial et T pour Tangentiel).

En l'absence de données sur les conductivités thermiques d'essences particulières, on peut appliquer le correctif suivant, fonction de la densité à 12 % (taux d'humidité) et concernant les directions transverses : λ = 0,62 *d* - 0,15 avec λ en W.m⁻¹.K⁻¹ et *d* la densité pour un taux d'humidité de 12%.

La conductivité thermique d'un matériau selon l'invention peut être mesurée selon différents principes bien connus de l'homme du métier. En effet, de nombreux principes de mesure de conductivité thermique existent, que l'on peut classer dans deux catégories : les méthodes en régime permanent (dont celle dite de « plaque chaude gardée », selon la norme ISO 8302) et les méthodes en régime transitoire où l'analyse dynamique d'une montée en température provoquée par un élément chauffant permet de calculer la diffusivité thermique, la capacité thermique massique et la conductivité thermique.

Les bois ayant des conductivités thermiques supérieures à 0,2 W.m⁻¹.K⁻¹ conviennent tout particulièrement à l'invention.

Le matériau de type bois traité selon l'invention peut avantageusement se présenter sous la forme d'une pièce de bois. Avantageusement, un matériau selon l'invention est au format de la pièce qu'il doit constituer.

Cette pièce de bois peut être de formes et dimensions diverses. Elle peut notamment être coupée et/ou usinée en la forme adaptée à l'utilisation envisagée, par exemple, comme revêtement de pinces pour saisir le verre, comme revêtement pour poussoir et comme surface de contact pour des convoyeurs de manipulation du verre.

Les pièces de bois traitées selon l'invention peuvent également déjà être façonnées aux formes et aux dimensions recherchées. Dans cette alternative, la pièce de bois possède avantageusement déjà la forme de la pièce qu'elle est dédiée à constituer et s'avère donc prête à l'emploi à l'issue du procédé selon l'invention.

### b) Particules métalliques

Comme énoncé ci-dessus, le matériau composite et en particulier le matériau de type bois considéré selon l'invention contient des nanoparticules métalliques.

Dans la description qui suit le terme « nanoparticules métalliques » sera utilisé pour désigner indifféremment un unique type de nanoparticules métalliques ou un mélange de plusieurs types de nanoparticules métalliques.

Les nanoparticules métalliques présentes dans le matériau composite selon l'invention sont pour l'essentiel c'est-à-dire à plus de 90% en poids, voire à 100% en poids par rapport à leur poids total à un état d'oxydation de zéro.

Avantageusement, les métaux convenant à l'élaboration des nanoparticules métalliques selon l'invention possèdent une conductivité de l'ordre de 65 W.m⁻¹.K⁻¹.

La taille des nanoparticules peut varier de 2 à 100 nm et en particulier de 2 à 15 nm. La taille peut être caractérisée à l'aide d'un microscope électronique à balayage.

Les nanoparticules métalliques peuvent notamment être choisies parmi les nanoparticules d'étain, de bronze et leurs alliages, notamment à base de cuivre.

Ainsi, les nanoparticules métalliques contiennent préférentiellement, à titre d'élément métal, un métal choisi parmi l'étain, le bronze et leurs alliages, notamment à base de cuivre.

Un matériau selon l'invention peut être chargé en des nanoparticules métalliques de nature chimique et/ou de taille différentes sous réserve qu'elles soient conformes aux autres exigences de l'invention.

Avantageusement, le taux de charge en nanoparticules métalliques réduites d'un matériau selon l'invention est d'au moins 3% en poids, de préférence de 3 à 10% en poids, de préférence de l'ordre de 5% en poids, notamment 5% en poids, par rapport au poids total du matériau composite après chargement des nanoparticules.

Le taux de charge en nanoparticules, au sens de l'invention, correspond au rapport entre la masse des nanoparticules et la masse totale du matériau composite après chargement des nanoparticules.

Le taux de charge peut notamment être sanctionné par simple pesage de la pièce de bois considérée avant et après transformation selon l'invention.

Le taux de charge en particules métalliques est un paramètre clef pour atteindre la conductivité thermique souhaitée. Il est en effet possible d'ajuster, par ce taux de charge, la valeur de conductivité thermique du matériau composite élaboré selon l'invention.

Un matériau composite selon l'invention possède avantageusement une conductivité thermique de l'ordre de 1 à 5 W.m⁻¹.K⁻¹, de préférence 1 à 2 W.m⁻¹.K⁻¹. Les conductivités thermiques peuvent être évaluées par filament chaud sur poudre avant mise en oeuvre par pression et/ou par méthode flash sur le composite final.

Selon un mode de réalisation, un matériau selon l'invention est formé d'un bois de frêne, de hêtre ou de charme chargé en nanoparticules d'étain, de préférence à un taux de charge de 3 % à 10 %, et de préférence 5 %.

A titre représentatif des matériaux composites conformes à l'invention peuvent notamment être cités :
- un matériau de bois d'essence de hêtre chargé en nanoparticules d'étain, de préférence avec un taux de charge de 5% ; et
- un matériau de bois d'essence de charme chargé en nanoparticules d'étain, de préférence avec un taux de charge de 5%.

### PROCEDE DE PREPARATION

Comme énoncé précédemment, le procédé selon l'invention vise à charger un matériau de type bois avec une ou plusieurs nanoparticules métalliques.

Le matériau de type bois choisi parmi les essences citées précédemment convient tout particulièrement pour le procédé décrit ci-après.

Pour ce faire, il met en contact, sous pression, un matériau de type bois poreux avec un fluide à un état supercritique et au moins des nanoparticules métalliques sous formes oxydée, dans des conditions propices à la pénétration de nanoparticules métalliques dans ledit matériau et à leur réduction in situ en particulier à un état d'oxydation de zéro.

### a) Fluide supercritique

Au sein de l'invention, un fluide supercritique est un fluide possédant une température critique, en deçà de laquelle il est à l'état liquide et un fluide à l'état supercritique est un fluide qui a été exposé, généralement sous pression, à une température supérieure à sa température critique.

Un fluide supercritique convenant à la présente invention peut être tout fluide approprié tel que, mais sans s'y limiter : le dioxyde de carbone, le protoxyde d'azote (N₂O).

Il s'agit de préférence du dioxyde de carbone.

Le dioxyde de carbone est un solvant que l'on considère comme « vert ». Le dioxyde de carbone a une température critique relativement basse (31,1°C). Il est pratiquement non-toxique, ininflammable, relativement inerte et ne présente que peu d'impact sur l'environnement par rapport aux autres solvants supercritiques cités ci-dessus. En outre, le dioxyde de carbone est relativement peu coûteux.

Le fluide chargé en nanoparticules oxydées et ayant évolué à l'état supercritique diffuse efficacement au sein du matériau et garantit ainsi une distribution homogène des particules oxydées au niveau du matériau de type bois et notamment à coeur.

Pour des raisons évidentes, les conditions de pression conditionnant le passage de l'état fluide à l'état supercritique sont variables selon le fluide considéré et leur ajustement relève clairement des compétences de l'homme du métier.

La réaction étant réalisée dans un réacteur fermé, par exemple un réacteur de type autoclave, la pression augmente avec la température. Les conditions supercritiques finales sont déterminées par le volume de remplissage initial du réacteur et la température finale. Après un certain temps de réaction, le réacteur est dépressurisé et refroidi en contournant le point critique du fluide supercritique. Le fluide est gazeux en fin d'expérience.

Dans le cas du CO₂, la réaction peut, par exemple, être réalisée à 30 MPa et à 100°C permettant au CO₂ d'être dans l'état supercritique.

Il peut également être considéré dans le procédé de l'invention la mise en oeuvre d'un co-solvant à l'image par exemple de l'acétone.

### b) Nanoparticules métalliques à l'état oxydé

Les nanoparticules métalliques sont mises en oeuvre à un état oxydé car propice à leur transport par le fluide supercritique.

Ainsi, des nanoparticules métalliques oxydées peuvent plus particulièrement se présenter sous la forme de sel(s) ou de complexe(s) métalliques.

A titre illustratif de ces formes précurseurs des nanoparticules métalliques peuvent tout particulièrement être cités les sels ou complexes et notamment de type acétylacétonate, dialkoxyde, dialkyle ou carboxylate d'étain.

En particulier, elles peuvent être choisies parmi les sels et complexes d'étain. Ces formes précurseurs de nanoparticules métalliques sont mises en oeuvre en quantité suffisante pour obtenir un taux de charge attendu. L'ajustement de cette quantité relève clairement des compétences de l'homme du métier.

D'une manière générale, ce taux de charge est obtenu via la réalisation de plusieurs cycles. Pour obtenir un taux de charge en masse de 2 à 5%, il est nécessaire de réaliser plusieurs cycles d'imprégnation et réduction successifs. Par exemple, en supposant un taux de chargement à chaque cycle de 0,2% en masse, une dizaine de cycles consécutifs sont considérés pour obtenir un taux de charge de 2%.

### c) Réducteur

Comme précisé ci-dessus, les nanoparticules métalliques sont véhiculées sous forme oxydée par le fluide à un état supercritique au sein du matériau à traiter.

La génération de nanoparticules métalliques à un état de degré d'oxydation moindre et notamment à un état d'oxydation de zéro est donc réalisée in situ et consécutivement à l'imprégnation du matériau de type bois à traiter par les nanoparticules oxydées.

Pour ce faire, le procédé selon l'invention considère également la mise en oeuvre d'un agent réducteur.

Un agent réducteur convenant à l'invention peut notamment être choisi parmi l'hydrazine, la phénylhydrazine et des réducteurs alcooliques.

Bien entendu, la quantité en cet agent réducteur est ajustée pour permettre la réduction des nanoparticules métalliques oxydées intégrées au niveau du matériau traité.

Cet ajustement relève clairement des compétences de l'homme du métier.

En particulier, le procédé selon l'invention peut comprendre au moins les étapes consistant à :
i) disposer, au sein d'un réacteur, par exemple un réacteur de type autoclave, d'un matériau de type bois, chargé ou non en particules métalliques, et d'un fluide liquide apte à évoluer sous pression à un état supercritique et contenant des nanoparticules métalliques à un état oxydé ; et
ii) exposer l'ensemble à des conditions de pression et température efficaces pour faire évoluer ledit fluide à un état supercritique et charger ledit matériau en nanoparticules métalliques oxydées ; et
iii) mettre en présence le matériau chargé en nanoparticules oxydées, obtenu à l'issue de l'étape précédente, avec un agent réducteur dans des conditions propices à la transformation in situ de nanoparticules métalliques oxydées en nanoparticules métalliques à un degré d'oxydation moindre, et en particulier de degré d'oxydation zéro.

L'étape ii) ou encore étape d'imprégnation a pour objet de véhiculer les nanoparticules métalliques oxydées via le fluide à l'état supercritique dans les porosités du bois.

Selon une variante préférée, l'étape ii) est réalisée à une pression comprise entre 20,0 et 35,0 MPa, de préférence d'environ 30,0 MPa, et à une température variant de 50 °C à 150°C, et de préférence d'environ 100°C.

Au sens de l'invention, une température ambiante est de l'ordre de 20 °C à plus ou moins 5 °C, et de préférence inférieure à 30 °C.

Par « une température d'environ », il est entendu que la température peut varier de plus ou moins 5 °C autour de la valeur indiquée.

De même, par « une pression d'environ », il est entendu que la température peut varier de plus ou moins 5 MPa autour de la valeur indiquée.

Ces valeurs de pression et température étant ajustées pour promouvoir le passage d'un fluide supercritique d'un état liquide à un état supercritique, elles vont varier selon la nature chimique du fluide considéré. Leur ajustement relève clairement des compétences de l'homme du métier.

Avantageusement, le fluide supercritique est le CO₂.

Dans le cas du CO₂, le réacteur contenant le matériau de type bois à traiter peut avantageusement être pressurisé à température ambiante et sous une atmosphère de CO₂, dont la pression est égale ou inférieure à 35,0 MPa.

Bien entendu, il est également possible d'ajuster ces paramètres de pression et le cas échéant de température pour moduler l'amplitude de l'imprégnation du matériau et sa vitesse de réalisation.

Le procédé peut être avantageusement réalisé au sein d'un réacteur pouvant être clos, mis sous forte pression et chauffé, par exemple au sein d'un réacteur de type autoclave. Il peut notamment être composé d'une alimentation en fluide supercritique à l'état liquide par exemple en CO₂ liquide, d'une enceinte de réaction, d'une pompe de mise sous pression de ce fluide et d'un dispositif de chauffage.

Selon un mode de réalisation particulier, le procédé selon l'invention comprend en outre consécutivement à l'étape ii) une étape ii)b de refroidissement à la température ambiante et pression atmosphérique.

Selon encore un autre mode de réalisation ces étapes ii) et ii)b peuvent constituer un cycle qui peut être reproduit une fois voire plus.

Selon encore un autre mode de réalisation, cette étape ii)b, ou la dernière étape ii)b dans le cas d'une répétition d'au moins deux cycles étape ii) et étape ii)b, peut être réalisée antérieurement ou simultanément à l'étape iii).

Le réducteur nécessaire à la réalisation de l'étape iii) peut être introduit au niveau de l'enceinte via une pompe, ce qui permet de réaliser l'intégralité du procédé en une seule montée en pression.

Selon une variante de réalisation, un matériau obtenu à l'issue de l'étape ii), ou de l'étape ii)b si existante (avant réduction), ou à l'issue de l'étape iii), peut être mis en oeuvre comme un matériau de type bois de l'étape i) et être traité selon les étapes ii) et iii), éventuellement l'étape ii)b.

Cette variante de réalisation a pour intérêt d'accroître progressivement le taux de charge.

Un procédé selon l'invention est ainsi avantageux pour obtenir un taux de charge du matériau de type bois traité selon l'invention de 3 à 10%, de préférence de 4% à 6 %. Comme précisé ci-dessus, un tel taux de charge peut notamment être obtenu en reproduisant une à plusieurs fois les cycles d'imprégnation sur un même substrat. Le substrat obtenu à l'issue de l'étape iib) ou ii) est dans ce mode de réalisation réintroduit à titre de substrat de l'étape i).

Comme énoncé précédemment, le procédé selon l'invention s'avère tout particulièrement intéressant pour accéder à un matériau composite qui s'avère particulièrement intéressant en termes de coût et dont le poids est minimisé comparativement aux inserts conventionnels à base de bronze et de téflon. Il est adapté à la mise en contact avec des objets à haute température. En particulier, il possède une résistance efficace à la chaleur et à l'usure et peut donc avantageusement être utilisé seul sans aucun revêtement fluide ou solide supplémentaire à appliquer sur sa surface extérieure pour une utilisation répétitive prolongée dans la manutention des articles chauds et notamment en verre.

Il convient également de noter que le matériau composite obtenu selon l'invention peut aisément être utilisé partout où il s'agit de manipuler un objet chaud, par exemple de la céramique, du métal, etc..., pour lesquels le fait de manipuler le produit ne doit pas l'endommager ou le marquer.

Dans l'ensemble du texte, les expressions « compris entre ... et ... », « allant de ... à ... » et « variant de ... à ... » sont équivalentes et entendent signifier que les bornes sont incluses, sauf mention contraire.

Sauf indication contraire, l'expression « comportant/comprenant un(e) » doit être comprise comme « comportant/comprenant au moins un(e) ».

D'autres avantages et caractéristiques de l'invention ressortiront mieux à la lecture de la description détaillée d'exemples de mise en oeuvre de l'invention soumis à titre illustratif et non limitatif de l'invention et par référence à la figure suivante.

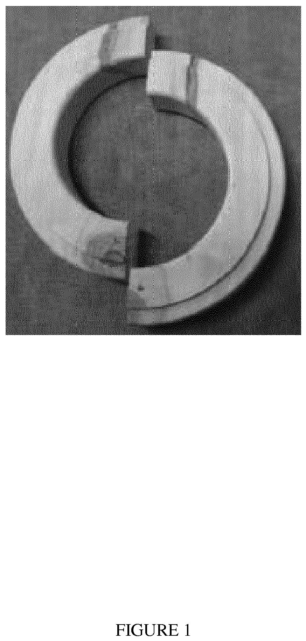

La figure 1 est une photographie d'un matériau de type bois ayant la forme d'un insert traité selon l'invention.

### EXEMPLE 1

### Etape i)

Une pièce de bois de hêtre de 50 g et ayant un diamètre intérieur 55mm, un diamètre extérieur 90 mm et une épaisseur de 16 mm, est placée dans un réacteur de type autoclave de IL muni d'organes de sécurité, vannes pointeaux, manomètre, et cordon chauffant. 10g de sel d'étain (CAS 301-10-0) (2-ethylhexanoate d'étain) et 2g d'acétone sont également introduits dans l'autoclave qui est également alimenté en CO₂ à l'état liquide.

### Etape ii)

La pression, la température et la durée de la réaction au sein du réacteur sont ajustées selon des cycles imposés afin de promouvoir la charge du bois en sels d'étain. Le tableau 1 ci-après détaille les conditions opératoires retenues.

| | Valeur préférée | min | max |
|---|---|---|---|
| Pression | 30 MPa (300 bars) | 20 | 35 |
| Température | 100 °C | 50 | 150 |
| Temps | 4 h | 2 h | 20 h |

Dans ces conditions, l'étain s'introduit sous forme d'ions dans la pièce en bois.

### Etape ii)b

A la fin de l'étape ii), il est procédé à un retour à température ambiante et pression atmosphérique, opéré dans les conditions suivantes.

| | Valeur préférée | min | max |
|---|---|---|---|
| Rampe de Pression | 3 MPa/h (30 bars/h) | 1 | 6 |
| Température | 10°C/h | 5 | 50 |

### Etape iii)

Il est procédé à un ajout de 2g de phenylhydrazine (CA 100-63-0) et 4 mL d'acétone pour réduire les nanoparticules de sels métalliques.

Après l'ajout, les conditions de pression et de température sont réajustées afin que le CO₂ soit à l'état supercritique.

| | Valeur préférée | min | max |
|---|---|---|---|
| Pression | 30 MPa (300 bar) | 20 | 35 |
| Température | 100 °C | 50 | 150 |
| Temps | 4 h | 2 h | 20 h |

Dans ces conditions, les particules métalliques stables sont réduites par l'hydrazine véhiculée par le CO₂ supercritique dans la pièce en bois.

### Répétition des étapes ii), ii)b et iii)

Il est procédé à la répétition des étapes ii), ii)b et iii) pour accroître le taux de charge métallique.

| | Valeur préférée | min | max |
|---|---|---|---|
| Nbre de répétition des étapes ii), ii)b et iii) | 10 | 3 | 20 |
| Taux de charge à l'issue de la répétition | 5 % | 3 % | 10 % |
| Conductivité thermique W.m⁻¹.K⁻¹ | 1,5 | 1 | 5 |

### REFERENCES BIBLIOGRAPHIQUES

[1] H. M. Bishop, Development of Materials for Handling Hot Glass, Thesis L3898, univ. of Newcastle Upon Tyne, 1991.
[2] https://www.mersen.com/uploads/tx_mersen/9-CERBERITE-hollow-glass-speciality-glass-Mersen_07.pdf
[3] http://www.dupont.com/content/dam/dupont/products-and-services/plastics-polymers-and-resins/parts-and-shapes/vespel/documents/DPM_Vespel_Brochure_Glass_Handling_ K22677-1_French.pdf
[4] Vespel© S Line Design Handbook
[5] https://www.ensinger-inc.com/downloads/lit_brochures/TECASINT-handbook.pdf
[6] http://www.graphitesales.com/data_sheets/T26-HDP.pdf
[7] http://cofral.com/wp-content/uploads/2016/09/FICHE-CC.pdf
[8] http://cofral.com/wp-content/uploads/2016/09/FICHE-GFE.pdf
[9] http://www.high-temperature-composites.com/hot-glass-handling-materials-tactylit.htm

## Revendications

1. Matériau composite adapté pour une mise en contact avec un ou des objet(s) ayant une température supérieure ou égale à 250°C, **caractérisé en ce que** ledit matériau est un bois chargé en nanoparticules métalliques, ledit matériau possédant un taux de charge en nanoparticules métalliques réduites d'au moins 3% en poids par rapport au poids total du matériau composite après chargement des nanoparticules.

2. Matériau selon la revendication précédente dans lequel le bois possède une dureté supérieure à 2,5.

3. Matériau selon l'une quelconque des revendications précédentes dans lequel le bois est choisi parmi les essences de frêne, hêtre et de bois exotiques tel que l'ébène et le palissandre.

4. Matériau selon l'une quelconque des revendications précédentes dans lequel les nanoparticules métalliques contiennent à titre d'élément métal, un métal choisi parmi l'étain, le bronze et leurs alliages, notamment à base de cuivre.

5. Matériau selon l'une quelconque des revendications précédentes possédant un taux de charge en nanoparticules métalliques réduites de 3% à 10% en poids, et de préférence 5% en poids, par rapport au poids total du matériau composite après chargement des nanoparticules.

6. Matériau selon l'une quelconque des revendications précédentes formé d'un bois de frêne, de hêtre ou de charme chargé en nanoparticules d'étain, de préférence à un taux de charge de 3 % à 10 %, et de préférence 5 %.

7. Matériau selon l'une quelconque des revendications précédentes, au format de la pièce qu'il doit constituer.

8. Objet formé en partie d'un matériau composite selon l'une quelconque des revendications précédentes, cet objet étant en particulier un insert.

9. Procédé de préparation d'un matériau composite selon l'une des revendications 1 à 7, **caractérisé en ce qu'**il met en contact un matériau de type bois avec un fluide à un état supercritique véhiculant des nanoparticules métalliques à un état oxydé, dans des conditions de pression et de température propices à la pénétration de tout ou partie desdites nanoparticules dans ledit matériau et à la réduction *in situ* de tout ou partie desdites nanoparticules à un état d'oxydation zéro.

10. Procédé selon la revendication 9 comprenant au moins les étapes consistant à :
i) disposer, au sein d'un réacteur, par exemple un réacteur de type autoclave, d'un matériau de type bois, chargé ou non en particules métalliques, et d'un fluide liquide apte à évoluer sous pression à un état supercritique et contenant des nanoparticules métalliques à un état oxydé ; et
ii) exposer l'ensemble à des conditions de pression et température efficaces pour faire évoluer ledit fluide à un état supercritique et charger ledit matériau en nanoparticules métalliques oxydées ; et
iii) mettre en présence le matériau chargé en nanoparticules oxydées, obtenu à l'issue de l'étape précédente, avec un agent réducteur dans des conditions propices à la transformation in situ de nanoparticules métalliques oxydées en nanoparticules métalliques à un degré d'oxydation moindre, et en particulier à un degré d'oxydation zéro.

11. Procédé selon l'une quelconque des revendications 9 ou 10, dans lequel l'étape ii) est réalisée à une pression comprise entre 20,0 et 35,0 MPa, de préférence d'environ 30,0 MPa, et à une température variant de 50 °C à 150 °C, et de préférence d'environ 100°C.

12. Procédé selon l'une quelconque des revendications 9 à 11 comprenant en outre consécutivement à l'étape ii) une étape ii)b de refroidissement à la température ambiante et pression atmosphérique.

13. Procédé selon la revendication 12 dans lequel ladite étape ii)b peut être réalisée antérieurement ou simultanément à l'étape iii).

14. Procédé selon l'une quelconque des revendications 9 à 13, dans lequel un matériau obtenu à l'issue de l'étape ii), ou de l'étape ii)b si existante, ou à l'issue de l'étape iii), est mis en oeuvre comme un matériau de bois de l'étape i) et est traité selon les étapes ii) et iii), éventuellement l'étape ii)b.

15. Procédé selon l'une quelconque des revendications 9 à 14, dans lequel le bois est tel que défini en revendication 3.

16. Procédé selon l'une quelconque des revendications 9 à 15, dans lequel le fluide supercritique est le CO₂.

17. Procédé selon l'une quelconque des revendications 9 à 16, dans lequel les nanoparticules métalliques oxydées se présentent sous la forme de sel(s) ou de complexe(s) métalliques.

18. Procédé selon l'une quelconque des revendications 9 à 17, dans lequel la réduction est réalisée avec un agent réducteur notamment choisi parmi l'hydrazine, la phénylhydrazine et des réducteurs alcooliques.
